# EUROPÄISCHE PATENTSCHRIFT

(11) **EP 4 375 547 B1**
(45) Veröffentlichungstag und Bekanntmachung des Hinweises auf die Patenterteilung: **05.11.2025**
(21) Anmeldenummer: 23200755.9
(22) Anmeldetag: 29.09.2023
(51) Int. Cl.: F16K 17/04, F16K 37/00, G01L 9/00

(54) **SENSOR ZUR FUNKTIONSZUSTANDSÜBERWACHUNG EINES ABWASSERVENTILS**
SENSOR FOR MONITORING THE FUNCTIONAL STATE OF A WASTE WATER VALVE
CAPTEUR POUR SURVEILLER L'ÉTAT FONCTIONNEL D'UNE SOUPAPE D'ÉGOUT

(30) Priorität: 25.11.2022 AT 508932022
(43) Veröffentlichungstag der Anmeldung: 29.05.2024
(73) Patentinhaber: Microtronics Engineering GmbH, 3244 Ruprechtshofen (AT)
(72) Erfinder: Buber, Hans-Peter, 3243 St. Leonhard/Forst (AT); Buber, Thomas, 3243 St. Leonhard/Forst (AT); Kadla, Bernhard, 3150 Wilhelmsburg (AT)
(74) Vertreter: Patentanwaltskanzlei Matschnig & Forsthuber OG

(56) Entgegenhaltungen:
- CN-C- 100 462 605
- US-A- 4 213 021
- US-A1- 2021 404 167
- US-B2- 8 794 595

## Beschreibung

Die Erfindung betrifft einen Sensor zur Funktionszustandsüberwachung eines Abwasserventils für ein Unterdruckentwässerungssystem, wobei das Abwasserventil einen Innenbereich und eine den Innenbereich verschließende Hülle aufweist, wobei in der Hülle eine die Hülle hin zu dem Innenbereich durchsetzende Überwachungsöffnung zur Aufnahme eines Überwachungselements ausgebildet ist, wobei der Sensor Folgendes umfasst:
- ein Sensorgehäuse mit zumindest einer Lufteinlass- und einer Luftauslassöffnung, wobei in dem Sensorgehäuse zwischen der Lufteinlass- und der Luftauslassöffnung ein diese verbindender Luftkanal ausgebildet ist.

Bei Vorliegen von flachen Topologien oder bei hohen Grundwasserpegeln kann die Möglichkeit das Gefälle von Abwasserleitungen optimal zu wählen eingeschränkt sein. Um dennoch einen ordnungsgemäßen Transport von Abwässern sicherzustellen, können in solchen Fällen Abwasserkanalisationsanlagen eingesetzt werden, die Abwasser mittels Unterdruck- bzw. Vakuumtechnik transportieren. In derartigen Systemen wird in dem Abwasserrohrsystem, das vorzugsweise vollständig schließbar ist, ein Unterdruck (z.B. 0,6 Bar unterhalb des atmosphärischen Drucks; umgangssprachlich auch manchmal als Vakuum bezeichnet) aufgebaut und von Sammelschächten abgesaugt, wobei die Sammelschächte mit den Abwasserquellen wie z.B. Haushalten oder Gewerbebetrieben verbunden sind. In diesen Sammelschächten befinden sich Abwasserventile, die in der Regel ohne Stromversorgung allein durch hydrostatischen Druck gesteuert werden und das gesammelte Abwasser in das Unterdruck führende Abwasserrohrsystem abgeben können.

Kommt es zu einem Fehler des Ventils wird entweder kein Abwasser abgesaugt (z.B. bei Ausfall in Schließstellung) oder es kommt zu einem permanenten Druckverlust (wegen unvollständigem Erreichen der Schließstellung oder wegen undichter Membran), welcher erhöhten Energieeinsatz seitens der den Unterdruck erzeugenden Anlagen führt. Sofern mehrere Ventile von solchen Fehlern betroffen sind, kann dies im Extremfall zu einer generellen Störung der Abwasserentsorgung führen, die mit unangenehmen Folgen verbunden sein können, wie z.B. dem Austreten der Fäkalien bei einem Spülvorgang.

Ein Ventil verfügt über eine gewisse Anzahl an Hüben (Schließ und Öffnungszyklen) die es in der Lage ist auszuführen, also die Lebensdauer. Durch eine falsche Anwendung kann diese Lebensdauer empfindlich reduziert werden. So ist es zum Beispiel nicht gestattet in derartigen Kanalanalgen ein Schwimmbad zu entwässern. Der durchschnittliche Hub des Sammlers ist in der Regel kleiner als 10Liter. Bei einem 20m3 Schwimmbad müsste das Ventil 2.000mal arbeiten, wodurch es zu vorzeitigen Schäden am Ventil kommen kann. Die Abwasserventile sind daher einem Verschleiß ausgesetzt, weshalb Maßnahmen entwickelt wurden, mit denen sich die Funktion der Ventile bis zu einem gewissen Grad überwachen lässt.

Beispielsweise kann in den Unterdruckentwässerungssystemen bzw. Unterdruckentwässerungsanlagen der Energieverbrauch der den Unterdruck erzeugenden Vorrichtungen beobachtet werden. Um eine Leckage an den Ventilen festzustellen, werden gemäß dem Stand der Technik die Abwasserventile mit Einschraubvorrichtungen ausgestattet, welche mit einer eingeschraubten Pfeife versehen werden, die bei Auftreten einer Leckage einen Pfeifton abgibt. Nun ist es an den Bewohnern des Siedlungsgebietes dieses Pfeifen der Gemeinde oder Stadt zu melden. Diese Meldung erfolgt oftmals erst sehr spät, da Fehler durch Bewohner häufig erst abends oder am Wochenende bemerkt werden, wenn viele Menschen zu Hause sind. Dabei kann die Leckage bereits sehr schwerwiegend sein.

Ein Rückschlagventil mit einem Schalter, der auf die Bewegungen eines von einem beweglichen Ventilelement getragenen Magneten reagiert (entsprechend dem Oberbegriff von Anspruch 1) ist z.B. aus der US 4 213 021 A bekannt.

Eine Aufgabe der Erfindung besteht darin, eine Möglichkeit zu schaffen, die die Planung der Wartung von Unterdruckentwässerungssystemen erleichtert.

Diese Aufgabe wird mit einem Sensor der eingangs genannten Art gelöst, indem der Sensor weiters einen Kolben, der in dem Luftkanal angeordnet und zur Verschiebung innerhalb des Luftkanals eingerichtet ist, und zwar zwischen zumindest zwei Positionen, nämlich einer Referenzposition und einer ausgelenkten Position, wobei der Kolben und der Luftkanal dergestalt ausgebildet sind, dass der Luftkanal durch den Kolben in der Referenzposition verschlossen ist, sowie ein elastisches Federmittel aufweist, welches an dem Kolben angreift und auf den Kolben eine Federkraft ausübt, die den Kolben in Richtung der Referenzposition drückt, wobei das Sensorgehäuse einen Befestigungsabschnitt zur Befestigung an der Überwachungsöffnung des Abwasserventils aufweist, wobei sich die Luftauslassöffnung des Sensors durch den Befestigungsabschnitt erstreckt, sodass die Luftauslassöffnung des Sensors in einem an dem Abwasserventil verbauten Zustand dem Innenbereich der Hülle zugewandt ist und die Lufteinlassöffnung in diesem verbauten Zustand einem Außenbereich der Hülle zugewandt ist, sodass der Kolben des Sensor in einem an dem Abwasserventil verbauten Zustand in Abhängigkeit von Druckdifferenzen zwischen Innen- und Außenbereich der Hülle des Abwasserventils entgegen der Federkraft des Federmittels innerhalb des Luftkanals des Sensors verschiebbar ist. Durch Verschiebung des Kolbens bieten sich unterschiedliche Möglichkeiten Druckdifferenzen zu erfassen und/oder gegebenenfalls auszugleichen.

Der Ausdruck "Hülle" ist nicht einschränkend auf rein elastische Membranen zu verstehen, sondern kann auch Gehäuse usw. umfassen. Es ist im Prinzip jegliche Form als Hülle denkbar, die geeignet ist, in dem Ventil angeordnete Komponenten wie z.B. einen Verschließkolben, zu umschließen, wobei ein Teil der Hülle typischerweise als elastische Membran ausgebildet ist, die dazu eingerichtet ist, von dem Kolben dergestalt auf/in ein Abflussrohr gedrückt zu werden, dass diese den Durchfluss durch das Abflussrohr versperrt.

Insbesondere kann vorgesehen sein, dass der Befestigungsabschnitt ein außen an dem Sensorgehäuse ausgebildetes Außengewinde aufweist, das zum dichtenden Eingriff in ein in der Überwachungsöffnung ausgebildetes Innengewinde eingerichtet ist. Der Sensor kann somit besonders einfach mit bestehenden Abwasserventilen kombiniert werden.

Weiters kann vorgesehen sein, dass das Federmittel als Druckfeder aus Federstahldraht ausgebildet ist.

Insbesondere kann vorgesehen sein, dass der Kolben in Verbindung mit dem Luftkanal dazu eingerichtet ist, bei Überschreiten eines Druckdifferenzgrenzwertes eine Verschiebung des Kolbens innerhalb des Luftkanals ausgehend von der Referenzposition hin zu einer Entlüftungsposition zu erreichen, in welcher Entlüftungsposition der Luftkanal eine Erweiterung aufweist, sodass der Kolben den Luftkanal in der Entlüftungsposition nicht dichtend verschließt und die Entstehung eines druckdifferenzabhängigen Luftstroms von der Lufteinlassöffnung hin zu der Auslassöffnung freigegeben ist. Auf diese Weise können große Druckdifferenzen, die z.B. zu einem erhöhten Verschleiß des Abwasserventils führen würden, gezielt ausgeglichen werden. Die Hülle weist eine diese hin zu dem Innenbereich durchsetzende Überwachungsöffnung zur Aufnahme eines Überwachungselements auf. Erfindungsgemäß handelt es sich bei diesem Überwachungselement um den besagten Sensor.

Weiters kann vorgesehen sein, dass die Erweiterung des Luftkanals als Querschnittsvergrößerung ausgebildet ist. Insbesondere kann vorgesehen sein, dass die Querschnittsvergrößerung zumindest 15mm² beträgt.

Weiters kann vorgesehen sein, dass der Sensor ein erstes Erfassungsmittel zur Erfassung der Position des Kolbens innerhalb des Luftkanals aufweist. Auf diese Weise kann überprüft werden, ob das Abwasserventil sauber schließt. Zudem kann auf die Anzahl der Arbeitszyklen des Abwasserventils rückgeschlossen werden, indem die bei einem Zyklus entstehenden Differenzdrücke, die durch Hübe des Kolbens bedingt werden, erfasst werden. Insbesondere kann vorgesehen sein, dass das erste Erfassungsmittel als Mittel zur magnetischen Kopplung mit einem mit dem Kolben ortsfest verbundenen magnetischen ersten Kopplungselement, insbesondere in Form eines Magneten, ausgebildet ist, wobei das erste Erfassungsmittel insbesondere als magnetischer Kontakt, insbesondere als Reedkontakt, ausgebildet ist, der dazu eingerichtet ist, in Abhängigkeit von der Position des ersten Kopplungselements aktiviert oder deaktiviert zu werden. Alternativ oder ergänzend dazu kann auch eine höher aufgelöste Positionserfassung des Schließkolbens des Abwasserventils erfolgen, um beispielsweise das Ausmaß von etwaigen Leckagen festzustellen.

Es ist vorgesehen, dass der Sensor einen von dem Befestigungsabschnitt abstehenden Messabschnitt aufweist, der dazu eingerichtet ist, sich in den Innenbereich des Abwasserventils zu erstrecken, wobei der Messabschnitt mit einem zweiten Erfassungsmittel zur Erfassung einer Arbeitsposition des Abwasserventils versehen ist. Damit kann auf besonders robuste Weise das Vorliegen des geschlossenen Zustands überprüft werden.

Insbesondere kann vorgesehen sein, dass das zweite Erfassungsmittel als Mittel zur magnetischen Kopplung mit einem im Innenbereich des Abwasserventils anordbaren zweiten magnetischen Kopplungselement, insbesondere einem Magneten, ausgebildet ist, wobei das zweite Erfassungsmittel insbesondere als Reedkontat ausgebildet ist. Ein Magnet ist dabei dergestalt am, insbesondere im Innenbereich des Abwasserventils angeordnet, dass im voll verschlossenen Zustand des Ventils die Schließposition erkannt und Abweichungen von diesem Zustand feststellbar sind.

Weiters kann vorgesehen sein, dass der Sensor eine Recheneinheit zur Erfassung von durch den Sensor erfassten Daten sowie ein mit der Recheneinheit verbundenes Kommunikationsmodul aufweist, wobei das Kommunikationsmodul zur drahtlosen Kommunikation der durch die Recheneinheit erfassten Daten eingerichtet ist. Insbesondere können dabei Daten bezüglich der Kolbenposition sowie der Arbeitsposition des Abwasserventils, insbesondere das korrekte Vorliegen einer Schließposition übertragen werden. Auch können Informationen zu etwaigen Leckagen übertragen werden. Auf diese Weise lassen sich Ferndiagnosen zu dem Verschleißzustand einzelner Abwasserventile sowie zu Ursachen etwaiger Ausfälle vornehmen. Zudem können defekte Abwasserventile rasch erkannt und gezielt repariert werden.

Die Erfindung betrifft weiters ein Ventilsystem umfassend einen erfindungsgemäßen Sensor sowie ein Abwasserventil mit einer Überwachungsöffnung, wobei der Sensor mittels seines Befestigungsabschnitts in die Überwachungsöffnung eingreift und an dem Abwasserventil befestigt ist.

Weiters betrifft die Erfindung ein Abwassersystem für Unterdruckentwässerungssysteme, wobei das Abwassersystem zumindest ein Abwasserrohr sowie ein erfindungsgemäßes Ventilsystem zum Öffnen/Verschließen des Abwasserrohres umfasst.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines Unterdruckentwässerungssystems,
Figur 2a und 2b schematische Darstellungen eines Abwasserventils in geschlossenem und offenem Zustand,
Figur 3 eine schematische Darstellung eines Abwasserventils mit eingesetztem Überwachungselement bei Leckage,
Figur 4 eine perspektivische Darstellung einer beispielhaften Ausführungsform eines erfindungsgemäßen Sensors,
Figur 5a und b Darstellungen eines Abwasserventils mit eingesetztem Sensor in einem geschlossenen und einem offenen Zustand,
Figur 6a bis 6c Schnittdarstellungen des Sensors in unterschiedlichen Zuständen, und
Figur 7a bis 7c Detaildarstellungen zu einem in dem Sensor ausgebildeten Luftkanal, wobei Fig. 7a eine Seitenansicht, Fig. 7b eine Draufsicht ohne Kolben und Fig. 7c eine Draufsicht mit eingesetztem Kolben zeigt.

In den folgenden Figuren bezeichnen - sofern nicht anders angegeben - gleiche Bezugszeichen gleiche Merkmale.

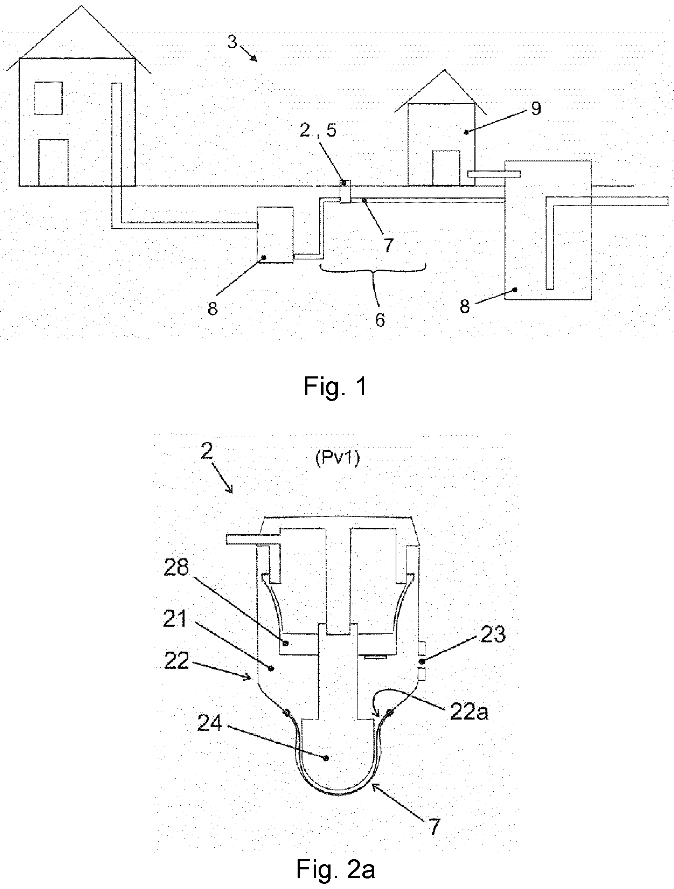

Figur 1 zeigt ein Unterdruckentwässerungssystem 3. Dieses Unterdruckentwässerungssystem 3 kann dazu dienen Abwasser diverser Einspeiser wie z.B. Wohnhäuser trotz widriger topologischer Umstände abzutransportieren. Wie bereits erwähnt wird hierzu durch einen Unterdruckerzeuger 9 ein Abwassersystem 6 mit einem Unterdruck beaufschlagt, der für den Weitertransport von in dem Abwassersystem 6 geführtem Abwasser genutzt werden kann. Das Abwassersystem 6 umfasst dabei Abwasserrohre 7 zur Führung des Abwassers, sowie zumindest ein Abwasserventil 2, typischerweise eine Vielzahl an Abwasserventilen 2, um einzelne Abschnitte eines verzweigten Abwassersystems 6 durchzuschalten bzw. zu sperren. Das Abwasser wird dabei typischerweise in Sammelbehältern 8 gesammelt, die, sobald sie einen gewissen Füllstand erreicht haben, eine zwischenzeitliche Aktivierung eines Abwasserventils 2 auslösen können, sodass gesammeltes Abwasser über das entsprechend angebundene Abwasserrohr 7 forttransportiert wird. Es versteht sich von selbst, dass das Abwassersystem 6 eine Vielzahl an Rohren 7 sowie Sammelbehältern 8 enthalten kann. Beispielsweise ist der Sammelbehälter 8 in der rechten Bildhälfte der Figur 1 deutlich größer ausgeführt und zum Sammeln des in kleineren umliegenden Sammelbehältern 8 geführten Abwassers eingerichtet.

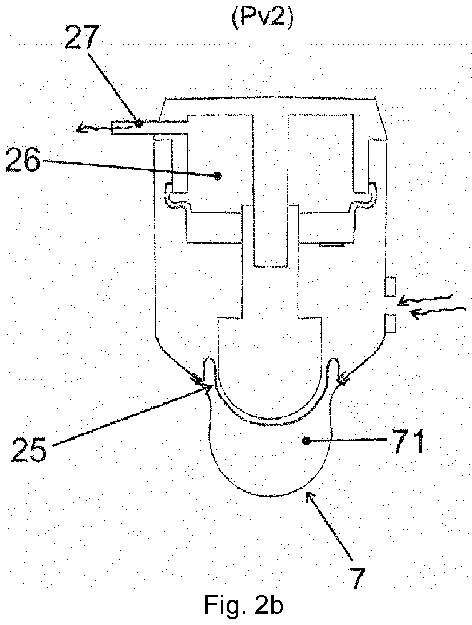

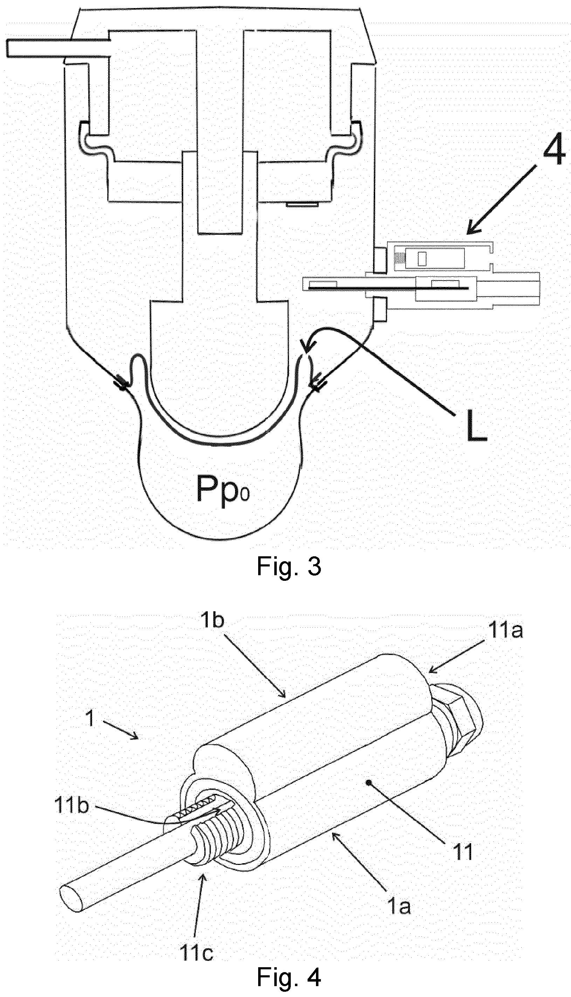

Figur 2a zeigt eine schematische Darstellung eines Abwasserventils 2 in einem geschlossenen Zustand. Das Abwasserventil 2 weist einen Innenbereich 21 und eine den Innenbereich 21 verschließende Hülle 22 auf, wobei in der Hülle 22 eine die Hülle 22 hin zu dem Innenbereich 21 durchsetzende Überwachungsöffnung 23 zur Aufnahme eines in Fig. 3 gezeigten Überwachungselements 4 ausgebildet ist. Das Abwasserventil 2 (nachfolgend auch kurz als "Ventil" bezeichnet) weist zudem einen Verschließkolben 24 auf, der dazu eingerichtet ist, gegen eine elastische Membran 22a zu drücken und dadurch einen Innenbereich 71 (siehe Fig. 2b) eines Abwasserrohres 7 zu verschließen. Wie in Fig. 2b erkennbar ist, kann der Verschließkolben 24 aufwärtsbewegt werden, sodass die Membran 25 sich nach oben wölbt und den Innenbereich des Rohres 71 freigibt. Der Verschließkolben 24 ist dabei dichtend auf einem Halteteller 28 montiert. Durch die Verschiebung des Verschließkolbens 24 vergrößert sich das Volumen des Innenbereichs 21 des Abwasserventils 2. Es entsteht ein Unterdruck im besagten Innenbereich 21, der eventuell durch einen Luftstrom durch die Überwachungsöffnung 23 ausgeglichen werden kann. Auf der dem Verschließkolben 24 gegenüberliegenden Seite des Haltetellers 28 ist ebenso ein Volumen 26 ausgebildet, das in der Position gemäß Fig. 2b verkleinert ist. Es entsteht ein Überdruck, der durch eine Ausgleichsöffnung 27 abgebaut werden kann. Die Ausgleichsöffnung 27 ist typischerweise als Bohrung mit einem Bohrungsdurchmesser von 5mm ausgebildet. Ein solches Loch hat eine Querschnittsfläche von 19,6mm2. Günstigerweise ist die Querschnittsfläche einer nachgenannten Erweiterung 12a das Luftkanals 12 zumindest gleich groß.

Figur 3 zeigt eine schematische Darstellung eines Abflussventils 2 mit eingesetztem Überwachungselement 4 im Falle einer Leckage L. Der im Innenbereich 71 des Rohres 7 ausgebildete Unterdruck Pp₀ greift zumindest teilweise auf den Innenbereich 21 des Abwasserventils 2 über. Durch ein in die Überwachungsöffnung 23 eingesetztes Überwachungselement 4 kann dieser dauerhafte Unterdruck bemerkbar gemacht werden. Gemäß dem Stand der Technik wurden bisher Pfeifen für diesen Zweck als Überwachungselement 4 eingesetzt, die im Falle eines unterdruckbedingten Luftstroms, der sich ausgehend von der Pfeife durch die Leckage hin zu dem Rohr 7 fortsetzt, einen Pfeifton abgeben. Die vorliegende Erfindung liefert eine innovative Art eines Überwachungselements 4 in Form eines Sensors 1, auf den mit Blick auf die nachfolgenden Figuren näher eingegangen wird.

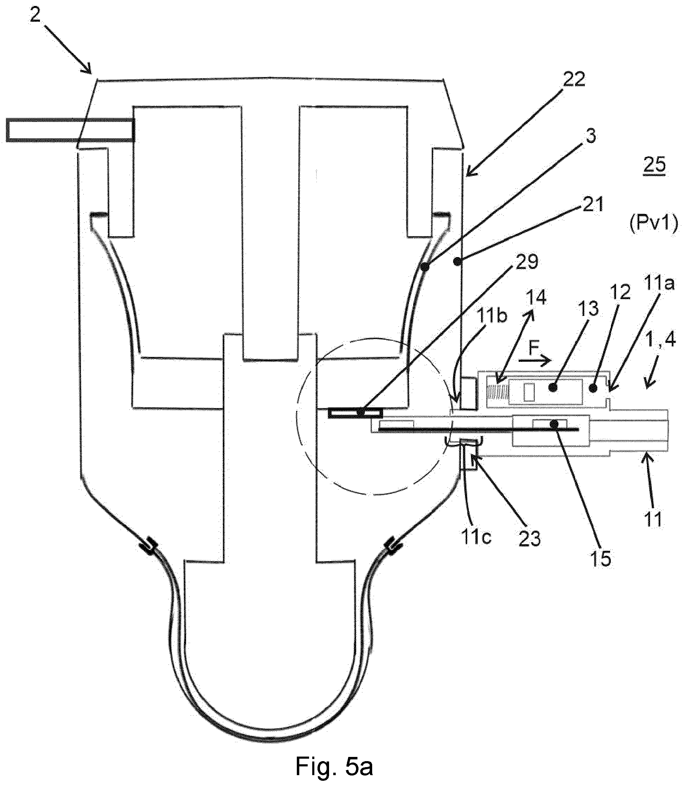

Figur 4 zeigt eine perspektivische Darstellung einer beispielhaften Ausführungsform eines erfindungsgemäßen Sensors 1. Der Sensor 1 ist zur Funktionszustandsüberwachung eines Abwasserventils 2 für ein Unterdruckentwässerungssystem 3 eingerichtet und umfasst ein Sensorgehäuse 11 mit zumindest einer Lufteinlass- 11a und einer Luftauslassöffnung 11b, wobei in dem Sensorgehäuse 11 zwischen der Lufteinlass- 11a und der Luftauslassöffnung 11b ein diese verbindender Luftkanal 12 ausgebildet ist, der in den Figuren 5a bis 7c näher dargestellt ist. Das Sensorgehäuse 11 weist einen Befestigungsabschnitt 11c zur Befestigung an der Überwachungsöffnung 23 eines Abwasserventils 2 auf. In der gezeigten Ausführungsform weist der Befestigungsabschnitt 11c beispielsweise ein außen an dem Sensorgehäuse 11 ausgebildetes Außengewinde 11d auf, das zum dichtenden Eingriff in ein in der Überwachungsöffnung 23 ausgebildetes Innengewinde eingerichtet ist.

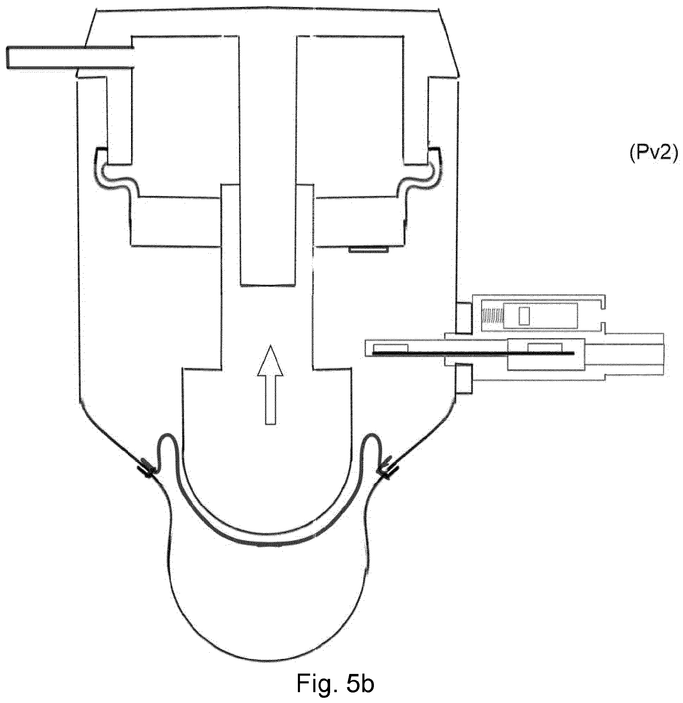

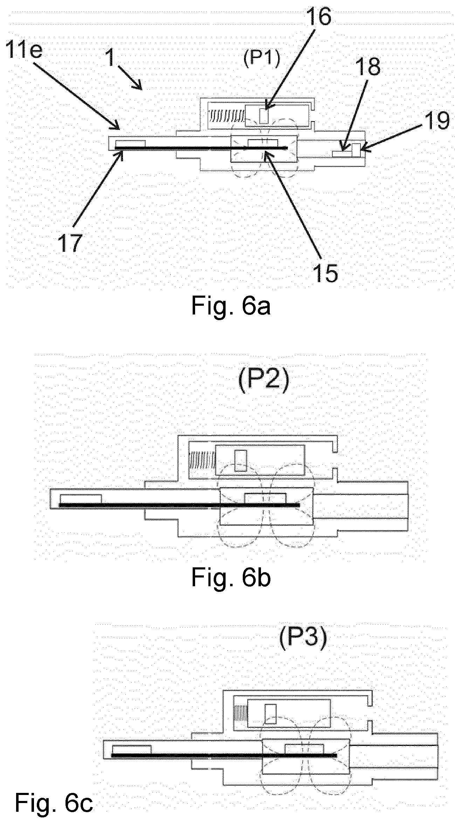

Figur 5a und 5b zeigen Darstellungen eines Abwasserventils 2 mit eingesetztem Sensor 1 in einem geschlossenen und einem offenen Zustand. Der Sensor 1 weist weiters einen Kolben 13 auf, der in dem Luftkanal 12 angeordnet und zur Verschiebung innerhalb des Luftkanals 12 eingerichtet ist, und zwar zwischen zumindest zwei Positionen, nämlich einer Referenzposition P1 (siehe Fig. 6a) und einer ausgelenkten Position P2 (siehe Fig. 6b) und/oder einer Entlüftungsposition P3 (siehe Fig. 6c), wobei der Kolben 13 und der Luftkanal 12 dergestalt ausgebildet sind, dass der Luftkanal 12 durch den Kolben 13 in der Referenzposition P1 verschlossen ist. Weiters weist der Sensor 1 ein elastisches Federmittel 14 auf, welches an dem Kolben 13 angreift und auf den Kolben 13 eine Federkraft F ausübt, die den Kolben 13 in Richtung der Referenzposition P1 drückt. Die Luftauslassöffnung 11b des Sensors 1 erstreckt sich durch den Befestigungsabschnitt 11c hindurch, sodass die Luftauslassöffnung 11b des Sensors 1 in einem an dem Abwasserventil 2 verbauten Zustand dem Innenbereich 21 der Hülle 22 zugewandt ist und die Lufteinlassöffnung 11a in diesem verbauten Zustand einem Außenbereich 25 der Hülle 22 zugewandt ist, sodass der Kolben 13 des Sensors 1 in einem an dem Abwasserventil 2 verbauten Zustand in Abhängigkeit von Druckdifferenzen zwischen Innen- 21 und Außenbereich 25 der Hülle 22 des Abwasserventils 2 entgegen der Federkraft F des Federmittels 14 innerhalb des Luftkanals 12 des Sensors 1 verschiebbar ist. Das Federmittel 14 ist als Druckfeder aus Federstahldraht ausgebildet.

Der Sensor 1 weist einen von dem Befestigungsabschnitt 11c abstehenden Messabschnitt 11e (siehe Fig. 6a) auf, der dazu eingerichtet ist, sich in den Innenbereich 21 des Abwasserventils 2 zu erstrecken, wobei der Messabschnitt 11e mit einem zweiten Erfassungsmittel 17 zur Erfassung einer Arbeitsposition Pv1 (gemäß der geschlossenen Ventilposition nach Fig. 5a) bzw. Pv2 (gemäß der offenen Ventilposition nach Fig. 5b) des Abwasserventils 2 versehen ist. Das zweite Erfassungsmittel 17 ist als Mittel zur magnetischen Kopplung mit einem im Innenbereich 21 des Abwasserventils 2 anordbaren zweiten magnetischen Kopplungselement 29, insbesondere einem Magneten, ausgebildet ist, wobei das zweite Erfassungsmittel 17 insbesondere als Reedkontat ausgebildet ist. In der geschlossenen Ventilposition Pv1 ist durch die unmittelbare Nähe des Kopplungselements 29 zu dem Erfassungsmittel 17 der Reedkontakt geschlossen. Auf diese Weise lässt sich einfach und effizient auf die Arbeitsposition des Ventils 2 rückschließen. Zudem kann durch Erfassen der Anzahl der Schaltvorgänge des Reedkontakts auf die Anzahl der Schließvorgänge des Ventils 2 rückgeschlossen werden. Diese Information kann zur Planung von Wartungsintervallen herangezogen werden.

Figuren 6a bis 6c zeigen Schnittdarstellungen des Sensors 1 in unterschiedlichen Zuständen, wobei der Sensor 1 im Abwasserventil 2 verbaut ist. In Fig. 6a ist ein erster Zustand P1 bzw. eine zugehörige Kolbenposition gezeigt, in der das Abwasserventil 2 sich in einem statischen Zustand (bereits eine Zeitdauer geschlossen oder offen) befindet und keine Leckage L vorliegt. Der Druck im Innenbereich 21 des Arbeitsventils 2 entspricht in etwa dem Druck im Außenbereich 25 des Arbeitsventils 2. Der Kolben 13 (kann auch als Sensorkolben bezeichnet werden, um Verwechslungen mit dem Verschließkolben 24 des Arbeitsventils 2 zu vermeiden) wird durch die von der Feder 14 ausgeübten Kraft in dieser ersten Position P1 gehalten.

Diese Position P1 kann durch ein erstes Erfassungsmittel 15 erfasst werden, mit dem die Position des Kolbens 13 innerhalb des Luftkanals 12 feststellbar ist. Das erste Erfassungsmittel 15 ist vorzugsweise als Mittel zur magnetischen Kopplung mit einem mit dem Kolben 13 ortsfest verbundenen magnetischen ersten Kopplungselement 16, insbesondere in Form eines Magneten, ausgebildet, wobei das erste Erfassungsmittel 15 insbesondere als magnetischer Kontakt, bevorzugt als Reedkontakt, ausgebildet ist, der dazu eingerichtet ist, in Abhängigkeit von der Position des ersten Kopplungselements 16 aktiviert oder deaktiviert zu werden. Fig. 6b zeigt den Sensor 1 in einem Zustand, in dem eine Leckage L vorliegt. Durch den im Innenbereich 21 das Arbeitsventils 2 entstehenden Unterdruck entsteht ein Differenzdruck zu dem atmosphärischen Druck des Außenbereichs 25, sodass der Kolben 13 entgegen de Federkraft F in Richtung der Feder 14 hin zu einer zweiten Position P2 verschoben wird. Das Ausmaß der Verschiebung korreliert mit dem Ausmaß der Leckage L. Durch genaue Erfassung der Position des Kolbens 13 kann daher eine Aussage über das Ausmaß der Leckage L getroffen werden. Auch diese Information kann zur Planung von Wartungseingriffen berücksichtigt werden.

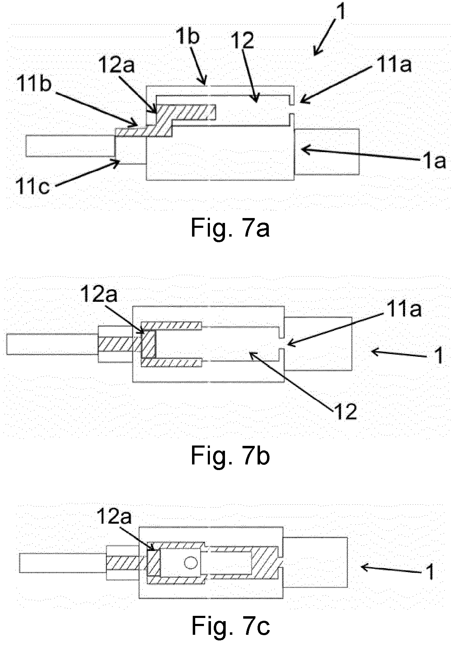

Fig. 6c zeigt den Sensor 1 in einem Zustand, in dem der Kolben 13 noch weiter nach links entgegen der Federkraft F ausgelenkt ist. Wie bereits eingangs erwähnt, entsteht während des Öffnungsvorganges des Arbeitsventils 2 ein Unterdruck, der typischerweise größer ist, als jene Unterdrücke, die durch Leckagen L verursacht werden. Wird der im Öffnungsvorgang ausgelöste Unterdruck nicht ausgeglichen, entstehen hohe Zugkräfte an der Membran 25, die diese deformieren und im Extremfall zu einem Loslösen der Membran 25 oder zu einem Riss in der Membran 25 führen können. Um diese Kräfte zu minimieren, kann der Sensor 1 zusätzlich mit einer Entlüftung ausgestattet sein, die in einer dritten Position, nämlich einer Entlüftungsposition P3, die in Fig. 6c gezeigt ist, erzielt wird. Diese Entlüftung wird durch die Art der Ausgestaltung des Lüftungskanals 12 in Verbindung mit dem Kolben 13 erzielt, wie mit Blick auf in Fig. 7a bis 7c näher erörtert wird.

Figuren 7a bis 7c zeigen Detaildarstellungen zu einem in dem Sensor 1 ausgebildeten Luftkanal 12. Figur 7a zeigt dabei eine Schnittdarstellung des Sensors 1 in einer Seitenansicht. In Fig. 4 ist erkennbar, dass ein zentraler Abschnitt des Sensors 1 in zwei Bereiche, nämlich eine mittlere Kammer 1a und eine darauf aufgesetzte Kammer 1b, aufgeteilt ist. Diese zwei Bereiche sind auch in Fig. 7a ersichtlich. Zur besseren Übersicht ist in Figuren 7a und 7b der Sensor 1 ohne darin angeordneten Kolben 13 dargestellt. Der obere Bereich 1b ist für die Entlüftung zuständig und enthält die Lufteinlassöffnung 11a. Der Kolben 13 ist in Verbindung mit dem Luftkanal 12 dazu eingerichtet, bei Überschreiten eines Druckdifferenzgrenzwertes eine Verschiebung des Kolbens 13 innerhalb des Luftkanals 12 ausgehend von der Referenzposition P1 hin zu einer Entlüftungsposition P3 zu erreichen, in welcher Entlüftungsposition P3 der Luftkanal 12 eine Erweiterung 12a aufweist, sodass der Kolben 13 den Luftkanal 12 in der Entlüftungsposition P3 nicht dichtend verschließt und die Entstehung eines druckdifferenzabhängigen Luftstroms zur Leckage L (siehe Fig. 3) von der Lufteinlassöffnung 11a hin zu der Auslassöffnung 11b freigegeben ist. Die Erweiterung 12a ist in Fig. 7a bis 7c durch schraffierte Flächen dargestellt. Die Erweiterung 12a des Luftkanals 12 ist als Querschnittsvergrößerung ausgebildet und beträgt vorzugsweise zumindest 15mm². Fig. 7b zeigt eine Draufsicht auf den Sensor 1. Die Luftauslassöffnung 11c ist mit der Erweiterung 12a verbunden. Fig. 7c zeigt ebenso eine Draufsicht auf den Sensor 1 entsprechend Fig. 7b. Allerdings ist dabei der Kolben 13 in dem Luftkanal 12 angeordnet und so weit nach links verschoben, dass dieser die Erweiterung 12a freigibt und Luft durch den Luftkanal 12 von der Einlassöffnung 11a hin zu Auslassöffnung 11b strömen kann. Der Kolben befindet sich dabei in der Entlüftungsposition P3. Sobald der Differenzdruck zwischen Innenbereich 21 und Außenbereich 25 einen Grenzwert (der in Abhängigkeit von dem Design des Kolbens und des Luftkanals sowie der Federkraft vorgegeben werden kann) unterschreitet, wandert der Kolben 13 wieder so weit nach rechts, dass dieser die Erweiterung 12a zumindest abschnittsweise verschließt und einen Luftstrom durch den Luftkanal 12 versperrt. Auf diese Weise kann einerseits eine Entlüftung des Innenbereichs 21 während eines Öffnungsvorganges des Arbeitsventils 2 erreicht werden, und gleichzeitig verhindert werden, dass eine Leckage L zu einem permanenten Zuströmen von Luft in den Innenbereich 21 und folglich in das Abwasserrohr 7 führt.

Weiters kann vorgesehen sein, dass der Sensor 1 eine Recheneinheit 18 zur Erfassung von durch den Sensor 1 erfassten Daten sowie ein mit der Recheneinheit 18 verbundenes Kommunikationsmodul 19 aufweist, wobei das Kommunikationsmodul 19 zur drahtlosen Kommunikation der durch die Recheneinheit 18 erfassten Daten eingerichtet ist.

Die Erfindung betrifft ebenso ein in Fig. 1 gezeigtes Ventilsystem 5 umfassend einen erfindungsgemäßen Sensor 1 sowie ein Abwasserventil 2 mit einer Überwachungsöffnung 23, wobei der Sensor 1 mittels seines Befestigungsabschnitts 11c in die Überwachungsöffnung 23 eingreift und an dem Abwasserventil 2 befestigt ist. Weiters betrifft die Erfindung ein Abwassersystem 6 für Unterdruckentwässerungssystem 3, wobei das Abwassersystem 6 zumindest ein Abwasserrohr 7 sowie ein erfindungsgemäßes Ventilsystem 5 zum Öffnen/Verschließen des Abwasserrohres 7 umfasst.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Sensor (1) zur Funktionszustandsüberwachung eines Abwasserventils (2) für ein Unterdruckentwässerungssystem (3), wobei das Abwasserventil (2) einen Innenbereich (21) und eine den Innenbereich (21) verschließende Hülle (22) aufweist, wobei in der Hülle (22) eine die Hülle (22) hin zu dem Innenbereich (21) durchsetzende Überwachungsöffnung (23) zur Aufnahme eines Überwachungselements (4) ausgebildet ist, wobei der Sensor (1) Folgendes umfasst:
- ein Sensorgehäuse (11) mit zumindest einer Lufteinlass- (11a) und einer Luftauslassöffnung (11b), wobei in dem Sensorgehäuse (11) zwischen der Lufteinlass- (11a) und der Luftauslassöffnung (11b) ein diese verbindender Luftkanal (12) ausgebildet ist,
wobei der Sensor (1) weiters Folgendes umfasst:
- einen Kolben (13), der in dem Luftkanal (12) angeordnet und zur Verschiebung innerhalb des Luftkanals (12) eingerichtet ist, und zwar zwischen zumindest zwei Positionen (P1, P2, P3), nämlich einer Referenzposition (P1) und einer ausgelenkten Position (P2, P3), wobei der Kolben (13) und der Luftkanal (12) dergestalt ausgebildet sind, dass der Luftkanal (12) durch den Kolben (13) in der Referenzposition (P1) verschlossen ist,
- ein elastisches Federmittel (14), welches an dem Kolben (13) angreift und auf den Kolben (13) eine Federkraft (F) ausübt, die den Kolben (13) in Richtung der Referenzposition (P1) drückt,
wobei das Sensorgehäuse (11) einen Befestigungsabschnitt (11c) zur Befestigung an der Überwachungsöffnung (23) des Abwasserventils (2) aufweist, wobei sich die Luftauslassöffnung (11b) des Sensors (1) durch den Befestigungsabschnitt (11c) erstreckt, sodass die Luftauslassöffnung (11b) des Sensors (1) in einem an dem Abwasserventil (2) verbauten Zustand dem Innenbereich (21) der Hülle (22) zugewandt ist und die Lufteinlassöffnung (11a) in diesem verbauten Zustand einem Außenbereich (25) der Hülle (22) zugewandt ist, sodass der Kolben (13) des Sensors (1) in einem an dem Abwasserventil (2) verbauten Zustand in Abhängigkeit von Druckdifferenzen zwischen Innen- (21) und Außenbereich (25) der Hülle (22) des Abwasserventils (2) entgegen der Federkraft (F) des Federmittels (14) innerhalb des Luftkanals (12) des Sensors (1) verschiebbar ist, **dadurch gekennzeichnet, dass** der Sensor (1) einen von dem Befestigungsabschnitt (11c) abstehenden Messabschnitt (11e) aufweist, der dazu eingerichtet ist, sich in den Innenbereich (21) des Abwasserventils (2) zu erstrecken, wobei der Messabschnitt (11e) mit einem zweiten Erfassungsmittel (17) zur Erfassung einer Arbeitsposition (Pv1, Pv2) des Abwasserventils (2) versehen ist.

2. Sensor (1) nach Anspruch 1, wobei der Befestigungsabschnitt (11c) ein außen an dem Sensorgehäuse (11) ausgebildetes Außengewinde (11d) aufweist, das zum dichtenden Eingriff in ein in der Überwachungsöffnung (23) ausgebildetes Innengewinde eingerichtet ist.

3. Sensor (1) nach einem der vorhergehenden Ansprüche, wobei das Federmittel (14) als Druckfeder aus Federstahldraht ausgebildet ist.

4. Sensor (1) nach einem der vorhergehenden Ansprüche, wobei der Kolben (13) in Verbindung mit dem Luftkanal (12) dazu eingerichtet ist, bei Überschreiten eines Druckdifferenzgrenzwertes eine Verschiebung des Kolbens (13) innerhalb des Luftkanals (12) ausgehend von der Referenzposition (P1) hin zu einer Entlüftungsposition (P3) zu erreichen, in welcher Entlüftungsposition (P3) der Luftkanal (12) eine Erweiterung (12a) aufweist, sodass der Kolben (13) den Luftkanal (12) in der Entlüftungsposition (P3) nicht dichtend verschließt und die Entstehung eines druckdifferenzabhängigen Luftstroms (L) von der Lufteinlassöffnung (11a) hin zu der Auslassöffnung (11b) freigegeben ist.

5. Sensor (1) nach Anspruch 4, wobei die Erweiterung (12a) des Luftkanals (12) als Querschnittsvergrößerung ausgebildet ist.

6. Sensor (1) nach Anspruch 5, wobei die Querschnittsvergrößerung zumindest 15mm² beträgt.

7. Sensor (1) nach einem der Ansprüche 4 bis 6, die Erweiterung (12a) des Luftkanals (12) dergestalt angeordnet ist, dass eine leckagebedingte Druckveränderung bloß zu einem Verschieben des Kolbens (13) hin zu einer zweiten Position (P2) führt, welche zweite Position (P2) zwischen der Referenzposition (P1) und der Entlüftungsposition (P3) liegt, sodass im montierten Zustand des Sensors (1) bei Unterschreiten des Druckdifferenzgrenzwertes eine Leckage (L) des Abwasserventils (2) zu keinem permanenten Zuströmen von Luft in den Innenbereich (21) führt, wobei vorzugsweise vorgesehen ist, dass der Sensor (1) ein erstes Erfassungsmittel (15) zur Erfassung der Position des Kolbens (13) innerhalb des Luftkanals (12) aufweist, wobei das Erfassungsmittel (15) dergestalt angeordnet ist und ausgebildet ist, dass die Position des Kolbens (13) ausgehend von der Referenzposition (P1) bereits vor Erreichen der Entlüftungsposition (P3) erfasst wird.

8. Sensor (1) nach einem der vorhergehenden Ansprüche, wobei der Sensor (1) ein erstes Erfassungsmittel (15) zur Erfassung der Position des Kolbens (13) innerhalb des Luftkanals (12) aufweist.

9. Sensor (1) nach Anspruch 8, wobei das erste Erfassungsmittel (15) als Mittel zur magnetischen Kopplung mit einem mit dem Kolben (13) ortsfest verbundenen magnetischen ersten Kopplungselement (16), insbesondere in Form eines Magneten, ausgebildet ist, wobei das erste Erfassungsmittel (15) insbesondere als magnetischer Kontakt, insbesondere als Reedkontakt, ausgebildet ist, der dazu eingerichtet ist, in Abhängigkeit von der Position des ersten Kopplungselements (16) aktiviert oder deaktiviert zu werden.

10. Sensor (1) nach Anspruch 8 oder 9, wobei der Sensor (1) dazu eingerichtet ist, durch Erfassen des Ausmaßes der Verschiebung der Position des Kolbens (13) auf das Ausmaß einer Leckage (L) des Abwasserventils (2) rückzuschließen.

11. Sensor (1) nach einem der vorhergehenden Ansprüche, wobei das zweite Erfassungsmittel (17) als Mittel zur magnetischen Kopplung mit einem im Innenbereich (21) des Abwasserventils (2) anordbaren zweiten magnetischen Kopplungselement (29), insbesondere einem Magneten, ausgebildet ist, wobei das zweite Erfassungsmittel (17) insbesondere als Reedkontat ausgebildet ist.

12. Sensor (1) nach einem der vorhergehenden Ansprüche, wobei der Sensor (1) eine Recheneinheit (18) zur Erfassung von durch den Sensor (1) erfassten Daten sowie ein mit der Recheneinheit (18) verbundenes Kommunikationsmodul (19) aufweist, wobei das Kommunikationsmodul (19) zur drahtlosen Kommunikation der durch die Recheneinheit (18) erfassten Daten eingerichtet ist.

13. Ventilsystem (5) umfassend einen Sensor (1) nach einem der vorhergehenden Ansprüche sowie ein Abwasserventil (2) mit einer Überwachungsöffnung (23), wobei der Sensor (1) mittels seines Befestigungsabschnitts (11c) in die Überwachungsöffnung (23) eingreift und an dem Abwasserventil (2) befestigt ist.

14. Abwassersystem (6) für ein Unterdruckentwässerungssystem (3), wobei das Abwassersystem (6) zumindest ein Abwasserrohr (7) sowie ein Ventilsystem (5) nach Anspruch 13 zum Öffnen/Verschließen des Abwasserrohres (7) umfasst.

## Claims

1. Sensor (1) for monitoring the functional state of a waste water valve (2) for a vacuum drainage system (3), the waste water valve (2) having an inner region (21) and a casing (22) which closes the inner region (21), a monitoring opening (23) which passes through the casing (22) to the inner region (21) being formed in the casing (22) in order to accommodate a monitoring element (4), the sensor (1) comprising the following
- a sensor housing (11) with at least one air inlet opening (11a) and one air outlet opening (11b), wherein an air duct (12) connecting these is formed in the sensor housing (11) between the air inlet opening (11a) and the air outlet opening (11b),
wherein the sensor (1) further comprises the following:
- a piston (13) which is arranged in the air duct (12) and is set up for displacement within the air duct (12), namely between at least two positions (P1, P2, P3), namely a reference position (P1) and a deflected position (P2, P3), the piston (13) and the air duct (12) being designed in such a way that the air duct (12) is closed by the piston (13) in the reference position (P1),
- an elastic spring means (14), which engages the piston (13) and exerts a spring force (F) on the piston (13), which presses the piston (13) in the direction of the reference position (P1),
wherein the sensor housing (11) has a fastening section (11c) for fastening to the monitoring opening (23) of the waste water valve (2), wherein the air outlet opening (11b) of the sensor (1) extends through the fastening portion (11c), so that the air outlet opening (11b) of the sensor (1) faces the inner region (21) of the casing (22) in a state installed on the waste water valve (2) and the air inlet opening (11a) faces an outer region (25) of the casing (22) in this installed state, so that the piston (13) of the sensor (1), in a state installed on the waste water valve (2), is displaceable within the air duct (12) of the sensor (1) against the spring force (F) of the spring means (14) as a function of pressure differences between the inner (21) and outer (25) regions of the casing (22) of the waste water valve (2), **characterized in that** the sensor (1) can be displaced against the spring force (F) of the spring means (14), **in that** the sensor (1) has a measuring section (11e) which projects from the fastening section (11c) and is set up to extend into the inner region (21) of the waste water valve (2), the measuring section (11e) being provided with a second detection means (17) for detecting a working position (Pv1, Pv2) of the waste water valve (2).

2. Sensor (1) according to claim 1, wherein the fastening section (11c) has an external thread (11d) formed on the outside of the sensor housing (11), which is set up for sealing engagement in an internal thread formed in the monitoring opening (23).

3. Sensor (1) according to one of the preceding claims, wherein the spring means (14) is designed as a compression spring made of spring steel wire.

4. Sensor (1) according to one of the preceding claims, wherein the piston (13) in connection with the air duct (12) is arranged to achieve a displacement of the piston (13) within the air duct (12) starting from the reference position (P1) towards a venting position (P3) when a pressure difference limit value is exceeded, in which venting position (P3) the air duct (12) has an expansion (12a), so that the piston (13) does not seal the air duct (12) in the venting position (P3) and the formation of a pressure difference-dependent air flow (L) from the air inlet opening (11a) to the outlet opening (11b) is enabled.

5. Sensor (1) according to claim 4, wherein the extension (12a) of the air duct (12) is designed as an enlargement of the cross-section.

6. Sensor (1) according to claim 5, wherein the cross-sectional enlargement is at least 15 mm².

7. Sensor (1) according to one of claims 4 to 6, the extension (12a) of the air duct (12) being arranged in such a way that a leakage-induced pressure change merely leads to a displacement of the piston (13) towards a second position (P2), which second position (P2) lies between the reference position (P1) and the venting position (P3), so that when the sensor (1) is mounted, a leakage (L) of the waste water valve (2) does not lead to a permanent inflow of air into the inner area (21) when the pressure difference falls below the pressure difference limit value, it being preferably provided that the sensor (1) has a first detection means (15) for detecting the position of the piston (13) within the air duct (12), the detection means (15) being arranged and designed in such a way that the position of the piston (13) is detected starting from the reference position (P1) even before the venting position (P3) is reached.

8. Sensor (1) according to one of the preceding claims, wherein the sensor (1) comprises a first detection means (15) for detecting the position of the piston (13) within the air duct (12).

9. Sensor (1) according to claim 8, wherein the first detection means (15) is designed as means for magnetic coupling with a magnetic first coupling element (16), in particular in the form of a magnet, which is connected in a stationary manner to the piston (13), wherein the first detection means (15) is designed in particular as a magnetic contact, in particular as a reed contact, which is set up to be activated or deactivated as a function of the position of the first coupling element (16).

10. Sensor (1) according to claim 8 or 9, wherein the sensor (1) is set up to draw conclusions about the extent of a leakage (L) of the waste water valve (2) by detecting the extent of the displacement of the position of the piston (13).

11. Sensor (1) according to one of the preceding claims, wherein the second detection means (17) is designed as a means for magnetic coupling with a second magnetic coupling element (29), in particular a magnet, which can be arranged in the inner region (21) of the waste water valve (2), wherein the second detection means (17) is designed in particular as a reed contact.

12. Sensor (1) according to one of the preceding claims, wherein the sensor (1) has a computing unit (18) for detecting data detected by the sensor (1) and a communication module (19) connected to the computing unit (18), wherein the communication module (19) is set up for wireless communication of the data detected by the computing unit (18).

13. Valve system (5) comprising a sensor (1) according to one of the preceding claims and a waste water valve (2) with a monitoring opening (23), wherein the sensor (1) engages in the monitoring opening (23) by means of its fastening section (11c) and is fastened to the waste water valve (2).

14. Waste water system (6) for a vacuum drainage system (3), wherein the waste water system (6) comprises at least one waste water pipe (7) and a valve system (5) according to claim 13 for opening/closing the waste water pipe (7).

## Revendications

1. Capteur (1) pour la surveillance de l'état de fonctionnement d'une soupape d'évacuation des eaux usées (2) pour un système de drainage par dépression (3), la soupape d'évacuation des eaux usées (2) présentant une zone intérieure (21) et une enveloppe (22) fermant la zone intérieure (21), une ouverture de surveillance (23) traversant l'enveloppe (22) en direction de la zone intérieure (21) étant formée dans l'enveloppe (22) pour recevoir un élément de surveillance (4), le capteur (1) comprenant ce qui suit :
- un boîtier de capteur (11) avec au moins une ouverture d'entrée d'air (11a) et une ouverture de sortie d'air (11b), un canal d'air (12) reliant l'ouverture d'entrée d'air (11a) et l'ouverture de sortie d'air (11b) étant formé dans le boîtier de capteur (11),
le capteur (1) comprenant en outre ce qui suit :
- un piston (13) disposé dans le conduit d'air (12) et adapté pour se déplacer à l'intérieur du conduit d'air (12) entre au moins deux positions (P1, P2, P3), à savoir une position de référence (P1) et une position déviée (P2, P3), le piston (13) et le conduit d'air (12) étant conçus de telle sorte que le conduit d'air (12) est fermé par le piston (13) dans la position de référence (P1),
- un moyen de ressort élastique (14) qui s'engage avec le piston (13) et exerce sur le piston (13) une force de ressort (F) qui pousse le piston (13) en direction de la position de référence (P1),
le boîtier de capteur (11) présentant une section de fixation (11c) pour la fixation à l'ouverture de surveillance (23) de la soupape d'évacuation (2), dans lequel l'ouverture de sortie d'air (11b) du capteur (1) s'étend à travers la section de fixation (11c), de sorte que l'ouverture de sortie d'air (11b) du capteur (1), dans un état monté sur la vanne d'évacuation des eaux usées (2), est orientée vers la zone intérieure (21) de l'enveloppe (22) et l'ouverture d'entrée d'air (11a), dans cet état monté, est orientée vers une zone extérieure (25) de l'enveloppe (22), de sorte que le piston (13) du capteur (1), dans un état monté sur la soupape d'évacuation des eaux usées (2), peut être déplacé à l'intérieur du canal d'air (12) du capteur (1) en fonction des différences de pression entre la zone intérieure (21) et la zone extérieure (25) de l'enveloppe (22) de la soupape d'évacuation des eaux usées (2), à l'encontre de la force élastique (F) du moyen élastique (14), **caractérisé, en ce que** le capteur (1) comporte une portion de mesure (11e) faisant saillie de la portion de fixation (11c) et adaptée pour s'étendre dans la zone intérieure (21) de la vanne d'évacuation (2), la portion de mesure (11e) étant pourvue d'un deuxième moyen de détection (17) pour détecter une position de travail (Pv1, Pv2) de la vanne d'évacuation (2).

2. Capteur (1) selon la revendication 1, dans lequel la partie de fixation (11c) présente un filetage extérieur (11d) formé à l'extérieur du boîtier de capteur (11) et adapté pour s'engager de manière étanche dans un filetage intérieur formé dans l'ouverture de surveillance (23).

3. Capteur (1) selon l'une des revendications précédentes, dans lequel le moyen élastique (14) est conçu comme un ressort de compression en fil d'acier à ressort.

4. Capteur (1) selon l'une des revendications précédentes, dans lequel le piston (13) est agencé en liaison avec le canal d'air (12) pour obtenir, en cas de dépassement d'une valeur limite de différence de pression, un déplacement du piston (13) à l'intérieur du canal d'air (12) à partir de la position de référence (P1) vers une position de purge (P3), dans laquelle position de purge (P3), le canal d'air (12) présente un élargissement (12a), de sorte que le piston (13) ne ferme pas de manière étanche le canal d'air (12) dans la position de purge (P3) et que l'apparition d'un flux d'air (L) dépendant de la différence de pression est libérée depuis l'ouverture d'entrée d'air (11a) vers l'ouverture de sortie (11b).

5. Capteur (1) selon la revendication 4, dans lequel l'élargissement (12a) du canal d'air (12) est réalisé sous la forme d'une augmentation de la section transversale.

6. Capteur (1) selon la revendication 5, dans lequel l'élargissement de la section transversale est d'au moins 15 mm².

7. Capteur (1) selon l'une des revendications 4 à 6, l'extension (12a) du canal d'air (12) étant agencée de telle sorte qu'une variation de pression due à une fuite entraîne uniquement un déplacement du piston (13) vers une deuxième position (P2), laquelle deuxième position (P2) se situe entre la position de référence (P1) et la position de purge (P3), de sorte qu'à l'état monté du capteur (1), lorsque la valeur limite de la différence de pression n'est pas atteinte, une fuite (L) de la soupape d'évacuation (2) n'entraîne pas d'afflux permanent d'air dans la zone intérieure (21), sachant qu'il est prévu de préférence que le capteur (1) présente un premier moyen de détection (15) pour détecter la position du piston (13) à l'intérieur du canal d'air (12), le moyen de détection (15) étant disposé et conçu de telle sorte que la position du piston (13) soit détectée à partir de la position de référence (P1) avant même d'atteindre la position de purge (P3).

8. Capteur (1) selon l'une des revendications précédentes, dans lequel le capteur (1) comporte un premier moyen de détection (15) pour détecter la position du piston (13) à l'intérieur du canal d'air (12).

9. Capteur (1) selon la revendication 8, dans lequel le premier moyen de détection (15) est réalisé sous la forme d'un moyen de couplage magnétique avec un premier élément de couplage magnétique (16) solidaire du piston (13), notamment sous la forme d'un aimant, le premier moyen de détection (15) étant notamment réalisé sous la forme d'un contact magnétique, notamment un contact Reed, agencé pour être activé ou désactivé en fonction de la position du premier élément de couplage (16).

10. Capteur (1) selon la revendication 8 ou 9, dans lequel le capteur (1) est agencé pour déduire l'étendue d'une fuite (L) de la vanne d'évacuation (2) en détectant l'étendue du déplacement de la position du piston (13).

11. Capteur (1) selon l'une des revendications précédentes, dans lequel le deuxième moyen de détection (17) est réalisé sous la forme d'un moyen de couplage magnétique avec un deuxième élément de couplage magnétique (29), notamment un aimant, pouvant être disposé dans la zone intérieure (21) de la vanne d'évacuation (2), le deuxième moyen de détection (17) étant notamment réalisé sous la forme d'un contacteur à lames.

12. Capteur (1) selon l'une des revendications précédentes, dans lequel le capteur (1) présente une unité de calcul (18) pour l'acquisition de données saisies par le capteur (1) ainsi qu'un module de communication (19) relié à l'unité de calcul (18), le module de communication (19) étant conçu pour la communication sans fil des données saisies par l'unité de calcul (18).

13. Système de vanne (5) comprenant un capteur (1) selon l'une des revendications précédentes ainsi qu'une vanne d'évacuation (2) avec une ouverture de surveillance (23), le capteur (1) s'engageant dans l'ouverture de surveillance (23) au moyen de sa partie de fixation (11c) et étant fixé à la vanne d'évacuation (2).

14. Système d'évacuation (6) pour un système d'évacuation par dépression (3), le système d'évacuation (6) comprenant au moins un tuyau d'évacuation (7) ainsi qu'un système de vanne (5) selon la revendication 13 pour ouvrir/fermer le tuyau d'évacuation (7).
